# EUROPEAN PATENT APPLICATION

(11) **EP 4 618 184 A1**
(43) Date of publication of application: **17.09.2025**
(21) Application number: 23925722.3
(22) Date of filing: 07.03.2023
(51) Int. Cl.: H01M 4/36, H01M 4/525, H01M 4/58

(54) **POSITIVE ELECTRODE MATERIAL COMPOSITION, SECONDARY BATTERY, AND ELECTRICAL DEVICE**

(71) Applicant: Contemporary Amperex Technology (Hong Kong) Limited, Hong Kong (HK)
(72) Inventor: QIN, Yiming, Ningde, Fujian 352100 (CN); XU, Xiaofu, Ningde, Fujian 352100 (CN); SUN, Jingxuan, Ningde, Fujian 352100 (CN); SHANG, Yibo, Ningde, Fujian 352100 (CN); PAN, Jianfu, Ningde, Fujian 352100 (CN); LIU, Qian, Ningde, Fujian 352100 (CN); YE, Yonghuang, Ningde, Fujian 352100 (CN)
(74) Representative: Gong, Jinping
(86) International application number: PCT/CN2023/080075
(87) International publication number: WO 2024/182998

(57) **Abstract**

The present application provides a positive electrode material composition, a secondary battery, and an electrical device, for use in improving the high-temperature storage performance of batteries. The positive electrode material composition comprises a phosphate positive electrode material and a ternary positive electrode material, the weight of the phosphate positive electrode material is recorded as W1, the weight of the ternary positive electrode material is recorded as W2, α = W1/(W1 + W2), 3% ≤ α ≤ 50%, the phosphate positive electrode material is a single crystal material or has a single crystal core, and the ternary positive electrode material is a single crystal material or has a single crystal core. The phosphate positive electrode material has the advantages of strong stability of a phosphate polyanion material, good cycle stability and long service life, and the ternary positive electrode material has high energy density. The phosphate positive electrode material is a single crystal material or has a single crystal core, and the ternary positive electrode material is a single crystal material or has a single crystal core, so that the cycle performance of a positive electrode material is further improved; and a single crystal material has small BET specific surface area, stable structure, large compaction density, and better high-temperature storage performance.

## Description

### TECHNICAL FIELD

The present application relates to the technical field of batteries, and in particular, to a positive electrode material composition, a secondary battery, and an electric device.

### BACKGROUND

Lithium-ion batteries are secondary batteries (rechargeable batteries) that primarily work by the movement of lithium ions between the positive electrode and negative electrode. During the charging and discharging process, Li ions are intercalated and deintercalated back and forth between the two electrodes: during charging, Li ions are deintercalated from the positive electrode, and intercalated into the negative electrode through the electrolyte, and the negative electrode is in a lithium-rich state; during discharging, the process is reversed.

Currently, there are various methods to improve the cycle performance of lithium-ion batteries, such as doping or cladding modification of the positive electrode material to slow down the degradation of its crystal structure during cycling; or combining positive electrode materials with different advantages to complement each other and improve the cycle performance and energy density of the battery. For example, lithium iron phosphate positive electrode materials and ternary positive electrode materials are combined. However, the ternary positive electrode material dominates the composition. Due to the limitations of the cycle stability of the ternary positive electrode material, the cycle stability of the composition is insufficiently improved, especially the performance during high-temperature storage.

### SUMMARY

The present application provides a positive electrode material composition, a secondary battery, and an electric device for use in improving the high-temperature storage performance of batteries.

According to a first aspect of the present application, provided is a positive electrode material composition, including a phosphate positive electrode material and a ternary positive electrode material, where a weight of the phosphate positive electrode material is recorded as W1, a weight of the ternary positive electrode material is recorded as W2, α = W1/(W1 + W2), 3% ≤ α ≤ 50%, the phosphate positive electrode material is a single crystal material or has a single crystal core, and the ternary positive electrode material is a single crystal or has a single crystal core.

Phosphate positive electrode materials are characterized by phosphate polyanion materials, and despite their low energy density, offer the advantages of strong stability, excellent cycle stability, and long service life. Ternary positive electrode materials have a high energy density, but the layered transition metal oxides suffer from material losses such as phase change/Li-Ni mixing/oxygen release and structural collapse during cycling, resulting in a shorter service life of the ternary positive electrode material compared to that of the phosphate positive electrode material. In the present application, the phosphate positive electrode material is a single crystal material or has a single crystal core, and the ternary positive electrode material is a single crystal or has a single crystal core, further improving the cycle performance of a positive electrode material. In addition, a single crystal material has a low BET specific surface area, a stable structure, a high compacted density, and better high-temperature storage performance.

In any embodiment of the first aspect, a particle size distribution of the positive electrode material composition described above satisfies the following relationship: 8 > Aα + B(1 - a) > 1, where A is a D_{V}50 of the phosphate positive electrode material, and B is a D_{V}50 of the ternary positive electrode material. The particle size matching effect between the phosphate positive electrode material and the ternary positive electrode material is further improved, thereby significantly enhancing high-temperature storage performance.

In any embodiment of the first aspect, the D_{V}50 of the phosphate positive electrode material described above is 0.8-8 µm, and the DV₉₀ < 30 µm, such that the processing feasibility and high-temperature stability of the positive electrode material composition are improved.

In a first embodiment of the first aspect, the BET specific surface area of the phosphate positive electrode material described above is 8-20 m²/g, which can further improve the structural stability, compacted density, and high-temperature storage performance of the positive electrode material composition.

In a first embodiment of the first aspect, the chemical formula of the phosphate positive electrode material described above is Li₁₊ₓMn_{1-y}A_{y}P_{1-z}R_{z}O₄, where x is any value in a range of - 0.100-0.100, y is any value in a range of 0.001-0.500, and z is any value in a range of 0.001-0.100, with the values of x, y, and z satisfying the following condition: maintaining electrical neutrality of the chemical formula; A includes one or more elements in the group consisting of Zn, Al, Na, K, Mg, Mo, W, Ti, V, Zr, Fe, Ni, Co, Ga, Sn, Sb, Nb, and Ge, and optionally A includes one or more elements in the group consisting of Fe, Ti, V, Ni, Co, and Mg; and R includes one or more elements in the group consisting of B, Si, N, S, F, Cl, and Br, and optionally R includes one element in the group consisting of B, Si, N, and S. Doping the phosphate with the element A and the element R contributes to improving the structural stability of the phosphate positive electrode material and the rate capability of the secondary battery having the phosphate positive electrode material.

In a second embodiment of the first aspect, a chemical formula of the phosphate positive electrode material described above is LiₐAₓMn_{1-y}B_{y}P_{1-z}C_{z}O₄₋ₙDₙ, where A includes one or more elements in the group consisting of Zn, Al, Na, K, Mg, Nb, Mo, and W, B includes one or more elements in the group consisting of Ti, V, Zr, Fe, Ni, Mg, Co, Ga, Sn, Sb, Nb, and Ge, C includes one or more elements in the group consisting of B (boron), S, Si, and N, D includes one or more elements in the group consisting of S, F, Cl, and Br, a is selected from a range of 0.9-1.1, x is selected from a range of 0.001-0.1, y is selected from a range of 0.001-0.5, z is selected from a range of 0.001-0.1, n is selected from a range of 0.001-0.1, and the phosphate positive electrode material is electrically neutral. By doping the specific elements described above in specific amounts at the four positions described above simultaneously, the rate capability, cycle performance, and/or high-temperature stability of the phosphate positive electrode material can be significantly improved.

In any embodiment of the first aspect, optionally, the phosphate positive electrode material includes a single crystal core and a cladding layer coating the single crystal core, where the single crystal core has the chemical formula Li₁₊ₓMn_{1-y}A_{y}P_{1-z}R_{z}O₄ or the chemical formula LiₐAₓMn_{1-y}B_{y}P_{1-z}C_{z}O₄₋ₙDₙ, and the cladding layer is optionally one or more layers of pyrophosphate, phosphate, or carbon. The functional cladding layer described above can effectively inhibit the leaching of transition metals and reduce the surface side reactions of the phosphate positive electrode material.

In any embodiment of the first aspect, the D_{V}50 of the ternary positive electrode material described above is 2-8 µm, and the D_{V}99 ≤ 18 µm. Particle size affects the specific capacity performance after mixing. Controlling the D_{V}50 and D_{V}99 of the ternary positive electrode material contributes to shortening the lithium ion diffusion path, reducing the bulk phase diffusion impedance, and reducing material polarization, and particularly has a more significant effect on improving the capacity after mixing.

In any embodiment of the first aspect, the BET specific surface area of the ternary positive electrode material described above is 0.42-1.5 m²/g. The structural stability, compacted density, and high-temperature storage performance of the positive electrode material can be further improved.

In any embodiment of the first aspect, the ternary positive electrode material described above is a single crystal NCM ternary positive electrode material or a single crystal NCA ternary positive electrode material, and optionally, in the ternary positive electrode material, a Ni molar content is 50%-99.5%, and a Co molar content is 0.5%-49.5%; further optionally, the Ni molar content is 60%-88%, and the Co molar content is 5%-35%. The Ni molar content affects the capacity performance of the ternary positive electrode material and has a significant impact on the energy density improvement of the blended material. The Co molar content enhances the electronic conductivity and ionic conductivity of the system, which can effectively improve the charging capacity of the ternary positive electrode material.

In any embodiment of the first aspect, the ternary positive electrode material described above has a chemical formula Li_{a'}Ni_{b'}Co_{c'}M1_{d'}M2_{e'}O_{f'}R'_{g'}, where 0.75 ≤ a' ≤ 1.2, 0 < b' < 1, 0 < c' < 1, 0 < d' < 1, 0 ≤ e' ≤ 0.2, 1 ≤ f' ≤ 2.5, 0 ≤ g' ≤ 1, f' + g' ≤ 3, M1 is Mn element and/or Al element, M2 is one or more elements selected from Zr, Zn, Cu, Cr, Mg, Fe, V, Ti, Sr, Sb, Y, W, and Nb, and R' is one or more elements selected from N, F, S, and Cl. Element doping is used to improve the cycle performance and rate capability of the ternary positive electrode material.

According to a second aspect of the present application, provided is a secondary battery. The secondary battery includes a positive electrode plate, the positive electrode plate includes a positive electrode active material, and the positive electrode active material is any one of the positive electrode material compositions according to the first aspect described above. The secondary battery having the positive electrode material composition of the present application has high energy density and cycle performance, and its high-temperature storage performance is also effectively improved.

According to a third aspect of the present application, provided is an electric device, including a secondary battery, where the secondary battery is selected from the secondary battery according to the second aspect. The electric device has better working stability under high temperature.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative work.
FIG. 1 is a schematic diagram of a secondary battery according to one embodiment of the present application.
FIG. 2 is an exploded view of the secondary battery according to one embodiment of the present application as shown in FIG. 1.
FIG. 3 is a schematic diagram of a battery module according to one embodiment of the present application.
FIG. 4 is a schematic diagram of a battery pack according to one embodiment of the present application.
FIG. 5 is an exploded view of the battery pack according to one embodiment of the present application as shown in FIG. 4.
FIG. 6 is a schematic diagram of an electric device using a secondary battery as a power source according to one embodiment of the present application.

The drawings are not drawn to scale.

### Description of the reference numerals:

1: battery pack; 2: upper case body; 3: lower case body; 4: battery module; 5: secondary battery; 51: housing; 52: electrode assembly; 53: top cover assembly.

### DETAILED DESCRIPTION

Implementations of the present application will be described in further detail with reference to the drawings and embodiments. The following detailed description of the embodiments and the drawings are used for the exemplary illustration of the principles of the present application, but are not intended to limit the scope of the present application. That is, the present application is not limited to the described embodiments.

Hereinafter, embodiments of the positive electrode material composition, the secondary battery, and the electric device of the present application are specifically disclosed in detail with appropriate reference to the drawings. However, unnecessary detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" represents an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

### [Secondary Battery]

Secondary batteries, also known as rechargeable batteries or storage batteries, refer to batteries that can continue to be used by reactivating their active materials through charging after discharging.

Typically, a secondary battery includes a positive electrode plate, a negative electrode plate, a separation film, and an electrolytic solution. During the charging and discharging process of the battery, active ions (such as lithium ions) are intercalated and deintercalated back and forth between the positive electrode plate and the negative electrode plate. The separation film is set between the positive electrode plate and the negative electrode plate to primarily prevent the positive and negative electrodes from short-circuiting, while allowing the passage of active ions. The electrolytic solution is between the positive electrode plate and the negative electrode plate, and primarily functions to conduct active ions.

### [Positive Electrode Material]

One embodiment of the present application provides a positive electrode material composition, including a phosphate positive electrode material and a ternary positive electrode material, where the weight of the phosphate positive electrode material is recorded as W1, the weight of the ternary positive electrode material is recorded as W2, α = W1/(W1 + W2), 3% ≤ α ≤ 50%, the phosphate positive electrode material is a single crystal material or has a single crystal core, and the ternary positive electrode material is a single crystal or has a single crystal core.

Phosphate positive electrode materials are characterized by phosphate polyanion materials, and despite their low energy density, offer the advantages of strong stability, excellent cycle stability, and long service life. Ternary positive electrode materials have a high energy density, but the layered transition metal oxides suffer from material losses such as phase change/Li-Ni mixing/oxygen release and structural collapse during cycling, resulting in a shorter service life of the ternary positive electrode material compared to that of the phosphate positive electrode material. In the present application, the phosphate positive electrode material is a single crystal material or has a single crystal core, and the ternary positive electrode material is a single crystal or has a single crystal core, further improving the cycle performance of a positive electrode material. In addition, a single crystal material has a low BET specific surface area, a stable structure, a high compacted density, and better high-temperature storage performance.

As a increases within the range described above, the cycle ability of the positive electrode material composition is enhanced.

### Definition of terms:

Phosphate positive electrode materials include not only LiMnPO₄, but also lithium manganese iron phosphate (LiMnₓFe₁₋ₓPO₄) series positive electrode materials, lithium manganese aluminum phosphate (LiMnₓAl₁₋ₓPO₄) series positive electrode materials, and the like, such as LiMnₓFe₁₋ₓPO₄, doped LiMnₓFe₁₋ₓPO₄, and LiMnₓFe₁₋ₓPO₄ with a cladding layer.

Polycrystalline materials refer to the positive electrode materials existing in the form of aggregates;

Single crystals are characterized by the absence of primary particle aggregation, and their particle sizes are generally 10-50 times larger than the primary particle size of aggregated materials (polycrystalline materials), with high internal crystallinity and no excess porosity.

When the positive electrode material composition is present in the positive electrode plate, the positive electrode plate is cut by using argon ion polishing, and element analysis is then performed on the planed surface. Subsequently, the main element ratios of the phosphate positive electrode material and the ternary material are compared separately, and the ratios correspond to their respective weights.

In some embodiments, the particle size distribution of the positive electrode material composition described above satisfies the following relationship: 8 > Aα + B(1 - a) > 1, where A is the DV₅₀ of the phosphate positive electrode material, and B is the DV₅₀ of the ternary positive electrode material. The particle size matching effect between the phosphate positive electrode material and the ternary positive electrode material is further improved, thereby significantly enhancing high-temperature storage performance.

In some embodiments, the D_{V}50 of the phosphate positive electrode material described above is 0.8-8 µm, such as 0.8 µm, 0.8 µm, 1 µm, 2 µm, 3 µm, 4 µm, 5 µm, 6 µm, 7 µm, or 8 µm, and the D_{V}90 < 30 µm, such that the processing feasibility and high-temperature stability of the positive electrode material composition are improved.

In some embodiments, the BET specific surface area of the phosphate positive electrode material described above is 8-20 m²/g, such as 8 m²/g, 10 m²/g, 12 m²/g, 15 m²/g, or 20 m²/g, which can further improve the structural stability, compacted density, and high-temperature storage performance of the positive electrode material composition.

In some embodiments, the chemical formula of the phosphate positive electrode material described above is Li₁₊ₓMn_{1-y}A_{y}P_{1-z}R_{z}O₄, where x is any value in a range of -0.100-0.100, y is any value in a range of 0.001-0.500, and z is any value in a range of 0.001-0.100, with the values of x, y, and z satisfying the following condition: maintaining electrical neutrality of the chemical formula; A includes one or more elements in the group consisting of Zn, Al, Na, K, Mg, Mo, W, Ti, V, Zr, Fe, Ni, Co, Ga, Sn, Sb, Nb, and Ge, and optionally is one or more elements in the group consisting of Fe, Ti, V, Ni, Co, and Mg; and R is one or more elements selected from the group consisting of B, Si, N, S, F, Cl, and Br, and optionally R is one element selected from the group consisting of B, Si, N, and S. The element A doped at the manganese site in lithium manganese iron phosphate contributes to reducing the lattice change rate of the lithium manganese iron phosphate during the lithium deintercalation process, thereby improving the structural stability of the lithium manganese iron phosphate positive electrode material, and significantly reducing the leaching of manganese while lowering the oxygen activity on the particle surface. The element R doped at the phosphorus site contributes to altering the difficulty of the Mn-O bond length variation, thereby lowering the lithium ion migration barrier, promoting lithium ion migration, and improving the rate capability of the secondary battery.

In some embodiments, the chemical formula of the phosphate positive electrode material described above is LiₐAₓMn_{1-y}B_{y}P_{1-z}C_{z}O₄₋ₙDₙ, where A includes one or more elements in the group consisting of Zn, Al, Na, K, Mg, Nb, Mo, and W, B includes one or more elements in the group consisting of Ti, V, Zr, Fe, Ni, Mg, Co, Ga, Sn, Sb, Nb, and Ge, C includes one or more elements in the group consisting of B (boron), S, Si, and N, D includes one or more elements in the group consisting of S, F, Cl, and Br, a is selected from a range of 0.9-1.1, such as 0.97, 0.977, 0.984, 0.988, 0.99, 0.991, 0.992, 0.993, 0.994, 0.995, 0.996, 0.997, 0.998, and 1.01, x is selected from a range of 0.001-0.1, such as 0.001, 0.005, 0.01, 0.02, 0.03, 0.04, 0.05, 0.06, 0.07, 0.08, 0.09, and 0.1, y is selected from a range of 0.001-0.5, such as 0.001, 0.005, 0.02, 0.05, 0.1, 0.15, 0.2, 0.25, 0.3, 0.34, 0.345, 0.349, 0.35, 0.4, and 0.5, z is selected from a range of 0.001-0.1, such as 0.001, 0.005, 0.08, and 0.1, n is selected from a range of 0.001-0.1, such as 0.001, 0.005, 0.08, and 0.1, and the phosphate positive electrode material is electrically neutral. A, B, C, and D are the elements doped at the Li, Mn, P, and O sites of the compound LiMnPO₄, respectively. Without being confined to theory, the performance improvement of phosphate materials is believed to be related to the reduction of lattice change rate during the lithium deintercalation process and the decrease in surface activity. A reduction in the lattice change rate can reduce the lattice constant differences between the two phases at grain boundaries, decrease interface stress, and enhance the transport ability of Li⁺ at the interface, thereby improving the rate capability of the positive electrode active material. However, high surface activity easily leads to severe side reactions at the interface, accelerating gas generation, electrolytic solution consumption, and damage to the interface, thus affecting the cycling and other performance of the battery. The phosphate positive electrode material described above reduces the lattice change rate through doping at Li and Mn sites. Mn-site doping also effectively reduces surface activity, thereby inhibiting the leaching of Mn and side reactions between the positive electrode active material and the electrolytic solution. P-site doping accelerates the rate of Mn-O bond length variation, lowering the migration barrier of the small polarons in the material, which is beneficial to electronic conductivity. O-site doping has a good effect on reducing interface side reactions. Doping at the P and O sites also affects the leaching of Mn caused by anti-site defects and dynamics performance. Therefore, the doping reduces the concentration of anti-site defects in the material, thereby improving the dynamics performance and specific capacity of the material, and can also alter the particle morphology, thus improving the compacted density. The applicant unexpectedly discovered that by doping specific elements in specific amounts at the Li, Mn, P, and O sites of the compound LiMnPO₄ simultaneously, a significant improvement in rate capability can be achieved, while significantly reducing the leaching of Mn and the doped elements at the Mn site, resulting in greatly improved cycle performance and/or high-temperature stability. Additionally, the specific capacity and compacted density of the material are also improved.

In some embodiments, optionally, the phosphate positive electrode material includes a single crystal core and a functional cladding layer coating the single crystal core, where the single crystal core has the chemical formula Li₁₊ₓMn_{1-y}A_{y}P_{1-z}R_{z}O₄, and the functional cladding layer is optionally one or more layers of pyrophosphate, phosphate, or carbon. Since the migration barrier of transition metals in pyrophosphate is relatively high (>1 eV), the leaching of transition metals can be effectively inhibited. Phosphates exhibit excellent lithium-ion conductivity and can reduce the content of surface lithium impurities. The carbon layer can effectively enhance the electrical conductivity and desolvation capability of LiMnPO₄, while also serving as a "barrier" to further impede the migration of manganese ions into the electrolytic solution and mitigate the corrosion of active materials by the electrolytic solution. Meanwhile, typically, the carbon layer described above in the mixture can also optimize the conductive network surrounding the ternary positive electrode material, thereby improving the mixing uniformity between the phosphate positive electrode material and the ternary positive electrode material.

In some embodiments, the D_{V}50 of the ternary positive electrode material described above is 2-8 µm, and the D_{V}99 ≤ 18 µm. Particle size affects the specific capacity performance after mixing. Controlling the D_{V}50 and D_{V}99 of the ternary positive electrode material contributes to shortening the lithium ion diffusion path, reducing the bulk phase diffusion impedance, and reducing material polarization, and particularly has a more significant effect on improving the capacity after mixing.

In some embodiments, the BET specific surface area of the ternary positive electrode material described above is 0.42-1.5 m²/g. The structural stability, compacted density, and high-temperature storage performance of the positive electrode material composition can be further improved.

In some embodiments, the ternary positive electrode material described above is a single crystal NCM ternary positive electrode material or a single crystal NCA ternary positive electrode material, and optionally, in the ternary positive electrode material, the Ni molar content is 50%-99.5%, such as 50%, 55%, 60%, 70%, 80%, 88%, 90%, 95%, or 99.5%, and the Co molar content is 0.5%-49.5%, such as 0.5%, 5%, 10%, 20%, 30%, 35%, 40%, 45%, or 50%; further optionally, the Ni molar content is 60%-88%, and the Co molar content is 5%-35%. The Ni molar content affects the capacity performance of the ternary positive electrode material and has a significant impact on the energy density improvement of the blended material. The Co molar content enhances the electronic conductivity and ionic conductivity of the system, which can effectively improve the charging capacity of the ternary positive electrode material.

In some embodiments, the ternary positive electrode material described above has a chemical formula Li_{a'}Ni_{b'}Co_{c'}M1_{d'}M2_{e'}O_{f'}R'_{g'}, where 0.75 ≤ a' ≤ 1.2, 0 < b' < 1, 0 < c' < 1, 0 < d' < 1, 0 ≤ e' ≤ 0.2, 1 ≤ f' ≤ 2.5, 0 ≤ g' ≤ 1, f' + g' ≤ 3, M1 is Mn element and/or Al element, M2 is one or more elements selected from Zr, Zn, Cu, Cr, Mg, Fe, V, Ti, Sr, Sb, Y, W, and Nb, and R' is one or more elements selected from N, F, S, and Cl. Element doping is used to improve the cycle performance and rate capability of the ternary positive electrode material.

The phosphate positive electrode material and ternary positive electrode material described above of the present application can be either commercially available materials or prepared materials, such as a series of single crystal lithium manganese iron phosphate positive electrode materials produced by Shenzhen Dynanonic Co., Ltd. (referred to as Dynanonic in the embodiments) and a series of single crystal ternary positive electrode materials produced by Ningbo Ronbay Lithium Battery Materials Co., Ltd. (referred to as Ronbay Technology in the examples).

### [Positive Electrode Plate]

A positive electrode plate generally includes a positive electrode current collector and a positive electrode film layer disposed on at least one surface of the positive electrode current collector, and the positive electrode film layer includes a positive electrode active material.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector can be fabricated by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, any one positive electrode material composition provided in the present application is used as the positive electrode active material.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

A negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other traditional materials that can be used as negative electrode active materials for batteries may also be used. These negative electrode active materials may be used alone or in combination of two or more.

In some embodiments, the negative electrode film layer further optionally includes a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components in a solvent (such as deionized water) to form a negative electrode slurry; applying the negative electrode slurry on the negative current collector, and performing drying, cold pressing, and other processes, such that the negative electrode plate can be obtained.

### [Electrolyte]

The electrolyte conducts ions between the positive electrode plate and the negative electrode plate. The present application has no specific restrictions on the type of the electrolyte, which can be selected according to needs. For example, the electrolyte may be liquid, gel, or all solid.

In some embodiments, the electrolyte is liquid and includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis((trifluoromethyl)sulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolytic solution further optionally includes an additive. As an example, the additive may include a negative electrode film-forming additive, a positive electrode film-forming additive, and may also include an additive capable of improving certain properties of the battery, such as an additive for improving the overcharge performance of the battery, an additive for improving the high- or low-temperature performance of the battery, or the like.

### [Separation Film]

In some embodiments, the secondary battery further includes a separation film. The present application does not particularly limit the type of the separation film, and any porous-structure separation film known to have good chemical stability and mechanical stability may be selected and used.

In some embodiments, the separation film may be made of a material including at least one of glass fiber, non-woven fabric, polyethylene, polypropylene, and polyvinylidene fluoride. The separation film may be a single-layer film or a multi-layer composite film, and there is no particular limitation on this. When the separation film is a multi-layer composite film, the materials of the layers may be the same or different, and there is no particular limitation on this.

In some embodiments, the positive electrode plate, the negative electrode plate, and the separation film may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, a steel shell, or the like. The outer packaging of the secondary battery may also be a soft pack, such as a pouch-type soft pack. The soft pack may be made of plastic, and examples of the plastic include polypropylene, polybutylene terephthalate, polybutylene succinate, and the like.

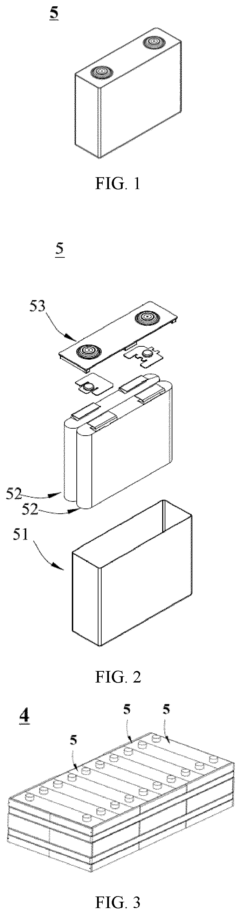

The present application does not particularly limit the shape of the secondary battery, and it may have a cylindrical shape, a prismatic shape, or any other shape. For example, FIG. 1 shows a secondary battery 5 having a prismatic structure as one example.

In some embodiments, referring to FIG. 2, the outer packaging may include a housing 51 and a cover plate 53. The housing 51 may include a bottom plate and a side plate connected to the bottom plate, and the bottom plate and the side plate define an accommodating cavity. The housing 51 is provided with an opening communicating with the accommodating cavity, and the cover plate 53 is capable of lidding the opening to close the accommodating cavity. The positive electrode plate, the negative electrode plate, and the separation film may be subjected to a winding process or a stacking process to form an electrode assembly 52. The electrode assembly 52 is packaged in the accommodating cavity. The electrolytic solution is infiltrated into the electrode assembly 52. The number of the electrode assembly 52 included in the secondary battery 5 may be one or more, and those skilled in the art can select the number according to specific and actual needs.

In some embodiments, the secondary battery may be assembled into a battery module. The number of secondary batteries included in the battery module may be one or more, and the specific number may be selected by those skilled in the art based on the use and capacity of the battery module.

FIG. 3 shows a battery module 4 as one example. Referring to FIG. 3, in the battery module 4, a plurality of secondary batteries 5 may be sequentially arranged in a length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the battery module described above may also be assembled into a battery pack. The number of the battery modules included in the battery pack may be one or more, and the specific number may be selected by those skilled in the art based on the use and capacity of the battery pack.

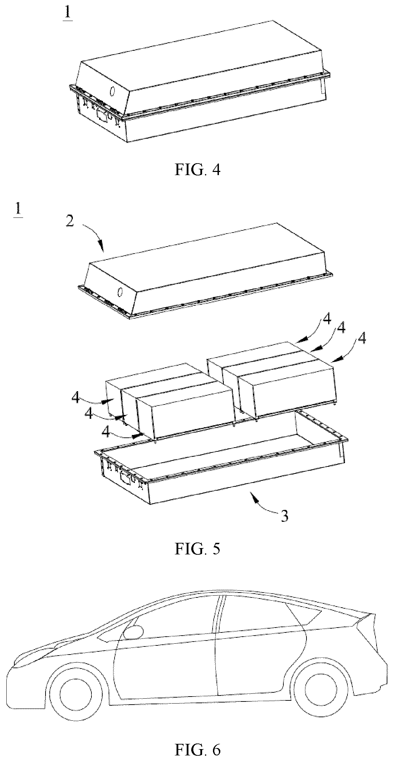

FIG. 4 and FIG. 5 show a battery pack 1 as one example. Referring to FIG. 4 and FIG. 5, the battery pack 1 may include a battery case and a plurality of battery modules 4 arranged in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, the present application further provides an electric device. The electric device includes at least one of the secondary battery, the battery module, or the battery pack provided in the present application. The secondary battery, the battery module, or the battery pack may be used as a power source for the electric device, and they may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery, a battery module, or a battery pack may be selected based on its use requirements.

FIG. 6 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

### [Examples]

Hereinafter, examples of the present application are described. The examples described below are illustrative and are merely used to explain the present application, and they should not be construed as limiting the present application. Examples without techniques or conditions specified therein are implemented according to techniques or conditions described in the literature in the art or according to product instructions. Reagents or instruments used herein without specified manufacturers are all commercially available conventional products.

**The sources of the positive electrode materials are as follows: The phosphate positive electrode material LiMn_{0.6}Fe_{0.4}PO₄ was purchased from Dynanonic, the ternary positive electrode material was purchased from Ronbay Technology, and the remaining positive electrode materials were prepared by the following method.**

### Preparation Example 1: Preparation of Li_{0.999}Mn_{0.60}Fe_{0.393}V_{0.004}Co_{0.003}P_{0.999}S_{0.001}O₄

### (1) Preparation of co-doped lithium manganese iron phosphate core

**Preparation of Fe, Co, and V co-doped manganese oxalate:** 689.5 g of manganese carbonate (calculated as MnCO₃, the same below), 455.2 g of ferrous carbonate (calculated as FeCO₃, the same below), 4.6 g of cobalt sulfate (calculated as CoSO₄, the same below), and 4.9 g of vanadium dichloride (calculated as VCl₂, the same below) were thoroughly mixed in a mixer for 6 h. The mixture was transferred to a reaction kettle, and 5 liters of deionized water and 1260.6 g of oxalic acid dihydrate (calculated as C₂H₂O₄.2H₂O, the same below) were added. The reaction kettle was heated to 80 °C, and the mixture was stirred at 600 rpm for 6 h until the reaction was terminated (no bubble was generated) to obtain a manganese oxalate suspension co-doped with Fe, Co, V, and S. The suspension was then filtered, and the filter cake was dried at 120 °C. The dried material was then ground using a jet mill, classified, and passed through a 325-mesh sieve to obtain Fe, Co, and V co-doped manganese oxalate dihydrate particles.

**Preparation of Fe, Co, V, and S co-doped lithium manganese iron phosphate:** The manganese oxalate dihydrate particles (1793.4 g) obtained in the previous step, 369.0 g of lithium carbonate (calculated as Li₂CO₃, the same below), 1.6 g of 60% dilute sulfuric acid (calculated as 60% H₂SO₄, the same below), and 1148.9 g of ammonium dihydrogen phosphate (calculated as NH₄H₂PO₄, the same below) were added to 20 liters of deionized water, and the mixture was stirred for 10 h and uniformly mixed to obtain a slurry. The slurry was transferred to a spray dryer for spray drying and granulation. The drying temperature was set at 250 °C and the mixture was dried for 4 h to obtain a powder. The powder described above was sintered at 700 °C for 4 h under a nitrogen (90% by volume) + hydrogen (10% by volume) protective atmosphere to obtain 1572.1 g of Fe, Co, V, and S co-doped lithium manganese iron phosphate.

**Preparation Example 2: Preparation of** Li_{0.094}Mo_{0.001}Mn_{0.65}Fe_{0.35}P_{0.999}Si_{0.001}O_{3.999}F_{0.001}

### 1) Preparation of positive electrode active materials

**Preparation of doped manganese oxalate:** 1.3 mol of MnSO₄· H₂O and 0.7 mol of FeSO₄· H₂O were thoroughly mixed in a mixer for 6 h. The mixture was transferred to a reaction kettle, and 10 L of deionized water and 2 mol of oxalic acid dihydrate (calculated as oxalic acid) were added. The reaction kettle was heated to 80 °C, and the mixture was stirred at 600 rpm for 6 h until the reaction was terminated (no bubble was generated) to obtain a manganese oxalate suspension doped with Fe. The suspension was then filtered, and the filter cake was dried at 120 °C. The dried material was then ground, classified, and passed through a 325-mesh sieve. The grinding was performed as needed to achieve the desired particle size, yielding Fe-doped manganese oxalate particles.

**Preparation of doped lithium manganese iron phosphate:** 1 mol of the manganese oxalate particles described above, 0.497 mol of lithium carbonate, 0.001 mol of Mo(SO₄)₃, 85% phosphoric acid aqueous solution containing 0.999 mol of phosphoric acid, 0.001 mol of H₄SiO₄, 0.0005 mol of NH₄HF₂, and 0.005 mol of sucrose were added to 20 L of deionized water. The mixture was transferred to a sand mill and thoroughly ground and stirred for 10 h to obtain a slurry. The slurry was transferred to a spray dryer for spray drying and granulation. The drying temperature was set at 250 °C and the mixture was dried for 4 h to obtain a particle. The powder described above was sintered at 700 °C for 10 h under a nitrogen (90% by volume) + hydrogen (10% by volume) protective atmosphere to obtain carbon-coated Li_{0.994}Mo_{0.001}Mn_{0.65}Fe_{0.35}P_{0.999}Si_{0.001}O_{3.999}F_{0.001}.

By adjusting the heating temperature of the reaction kettle, the mesh size of the sieve, and the sintering temperature in the Preparation Examples 1 and 2 described above, the volume particle size distribution and specific surface area of the obtained materials were adjusted. The preparation processes of various materials are not described individually herein.

The appearance of the positive electrode materials was observed using scanning electron microscopy, and the lithium manganese iron phosphate positive electrode material and the ternary positive electrode material in the examples were determined to be single crystal particles (a single crystal particle is a complete crystal sphere, and a polycrystalline particle is a large sphere formed by the aggregation of multiple small primary particles).

Particle size determination of the lithium manganese iron phosphate positive electrode material and the ternary positive electrode material in the examples by powder laser particle size test: The test was conducted with reference to national standard GB/T19077-2016, using deionized water as the solvent. Prior to the test, the samples were subjected to ultrasonic treatment for 5 min.

Powder specific surface area (BET) test: The test was conducted with reference to GB/T19587-2004. Before the test, the powder was placed in a vacuum oven at 200 °C and dried for no less than 2 h. Over 20 g of required amount of powder was weighed out.

Powder primary particle size test: The primary particle size of the powder was determined via scanning electron microscopy (SEM) analysis.

Specific capacity test: The button batteries prepared above were left to stand under a constant temperature environment of 25 °C for 5 min, and allowed to discharge at 0.1 C to 2.5 V; after standing for 5 min, the batteries were charged at 0.1 C constant current and constant voltage to 4.3 V or 4.25 V (Ni content > 70%, upper limit voltage was 4.25 V), and then charged at a constant voltage of 4.3 V or 4.25 V until the current reached ≤ 0.05 mA, and left to stand for 5 min. The charging capacity at this time was recorded as C0, and the batteries were then allowed to discharge at 0.1 C to 2.5 V. The discharge capacity at this time was the initial discharge capacity, and recorded as D0.

The specific capacity of the positive electrode active material was calculated by dividing the measured discharge capacity value (i.e., initial discharge capacity D0) by the mass of the positive electrode active material in the button battery.

**The specific capacity, D_{V}50, D_{V}90, and BET specific surface area of the lithium iron phosphate positive electrode material and the ternary positive electrode material used in the examples are recorded in Table 1.**

**Table 1**

| Number | Material | Specific capacity/ mAh/g | **D_{V}50/µm** | **D_{V}90/µm** | Specific surface area/m²/g |
|---|---|---|---|---|---|
| LMFP-1 | LiMn_{0.6}Fe_{0.4}PO₄ | 154 | 4.2 | 18.1 | 14.5 |
| LMFP-2 | Li_{0.999}Mn_{0.60}Fe_{0.393}V_{0.004}Co₀₀₀₃P_{0.999}S_{0.001}O₄ | 151 | 8.1 | 23.8 | 8.6 |
| LMFP-3 | Li_{0.999}Mn_{0.60}Fe_{0.393}V_{0.004}Co_{0.003}P_{0.999}S_{0.001}O₄ | 157 | 0.83 | 12.7 | 18.5 |
| LMFP-4 | Li_{0.999}Mn_{0.60}Fe_{0.393}V_{0.004}Co_{0.003}P_{0.999}S_{0.001}O₄ | 151 | 10.4 | 28.4 | 7.9 |
| LMFP-5 | Li_{0.999}Mn_{0.60}Fe_{0.393}V_{0.004}Co_{0.003}P_{0.999}S_{0.001}O₄ | 157 | 0.52 | 11.3 | 22.8 |
| LMFP-6 | Li_{0.999}Mn_{0.60}Fe_{0.393}V_{0.004}Co_{0.003}P_{0.999}S_{0.001}O₄ | 153 | 4.3 | 18.2 | 8.1 |
| LMFP-7 | Li_{0.999}Mn_{0.60}Fe_{0.393}V_{0.004}Co_{0.003}P_{0.999}S_{0.001}O₄ | 155 | 4.4 | 17.8 | 20.3 |
| LMFP-8 | Li_{0.999}Mn_{0.60}Fe_{0.393}V_{0.004}Co_{0.003}P_{0.999}S_{0.001}O₄ | 153 | 4.0 | 18.2 | 5.2 |
| LMFP-9 | Li_{0.999}Mn_{0.60}Fe_{0.393}V_{0.004}Co_{0.003}P_{0.999}S_{0.001}O₄ | 155 | 4.3 | 18.0 | 25.1 |
| LMFP-10 | Li_{0.999}Mn_{0.60}Fe_{0.393}V_{0.004}Co_{0.003}P_{0.999}S_{0.001}O₄ | 151 | 8.9 | 22.3 | 14.3 |
| LMFP-11 | Li_{0.999}Mn_{0.60}Fe_{0.393}V_{0.004}Co_{0.003}P_{0.999}S_{0.001}O₄ | 154 | 4.3 | 18.3 | 14.2 |
| LMFP-12 | Li_{0.994}Mo_{0.001}Mn_{0.65}Fe_{0.35}P_{0.999}Si_{0.001}O_{3.999}F_{0.001} | 154 | 4.3 | 18.3 | 14.2 |
| NCM-1 | LiNi_{0.65}Co_{0.07}Mn_{0.28}O₂ (Co content 7%, Ni content 65%) | 195 | 6.2 | 14.0 | 0.81 |
| NCM-2 | LiNi_{0.65}Co_{0.07}Mn_{0.28}O₂ (Co content 7%, Ni content 65%) | 190 | 13.1 | 18.1 | 0.81 |
| NCM-3 | LiNi_{0.65}Co_{0.07}Mn_{0.28}O₂ (Co content 7%, Ni content 65%) | 199 | 2.0 | 22.5 | 0.81 |
| NCM-4 | LiNi_{0.65}Co_{0.07}Mn_{0.28}O₂ (Co content 7%, Ni content 65%) | 191 | 8.1 | 16.3 | 0.81 |
| NCM-5 | LiNi_{0.65}Co_{0.07}Mn_{0.28}O₂ (Co content 7%, Ni content 65%) | 191 | 6.2 | 22 | 0.81 |
| NCM-6 | LiNi_{0.65}Co_{0.07}Mn_{0.28}O₂ (Co content 7%, Ni content 65%) | 194 | 6.3 | 14.7 | 0.42 |
| NCM-7 | LiNi_{0.65}Co_{0.07}Mn_{0.28}O₂ (Co content 7%, Ni content 65%) | 196 | 6.2 | 14.2 | 1.5 |
| NCM-8 | LiNi_{0.65}Co_{0.07}Mn_{0.28}O₂ (Co content 7%, Ni content 65%) | 197 | 6.2 | 14.2 | 2.2 |
| NCM-9 | LiNi_{0.65}Co_{0.07}Mn_{0.28}O₂ (Co content 7%, Ni content 65%) | 195 | 6.5 | 14.9 | 0.3 |
| NCM-10 | LiNi_{0.5}Co_{0.7}Mn_{0.43}O₂ (Co content 7%, Ni content 50%) | 175 | 6.2 | 14.3 | 0.81 |
| NCM-11 | LiNi_{0.995}Co_{0.002}Mn_{0.003}O₂ (Co content 0.2%, Ni content 99.5%) | 223 | 6.2 | 14.2 | 0.81 |
| NCM-12 | LiNi_{0.60}Co_{0.07}Mn_{0.33}O₂ (Co content 7%, Ni content 60%) | 188 | 6.2 | 14.2 | 0.81 |
| NCM-13 | LiNi_{0.83}Co_{0.07}Mn_{0.1}O₂ (Co content 7%, Ni content 83%) | 201 | 6.3 | 14.2 | 0.80 |
| NCM-14 | LiNi_{0.88}Co_{0.07}Mn_{0.05}O₂ (Co content 7%, Ni content 88%) | 217 | 6.2 | 14.2 | 0.81 |
| NCM-15 | LiNi_{0.405}Co_{0.495}Mn_{0.1}O₂ (Co content 49.5%, Ni content 40.5%) | 165 | 6.1 | 14.3 | 0.81 |
| NCM-16 | LiNi_{0.85}Co_{0.05}Mn_{0.1}O₂ (Co content 5%, Ni content 85%) | 203 | 6.2 | 14.3 | 0.81 |
| NCM-17 | LiNi_{0.55}Co_{0.35}Mn_{0.1}O₂ (Co content 35%, Ni content 55%) | 173 | 6.3 | 14.3 | 0.80 |
| NCM-18 | LiNi_{0.65}Co_{0.07}Mn_{0.28}O₂ (Co content 7%, Ni content 65%) | 201 | 6 | 14 | 0.81 |

Among them, NCM-18 is a secondary particle, and the rest are single crystal particles.

The compositions of the positive electrode material compositions of the examples and comparative examples are shown in Table 2 (where the proportion of LMFP is the mass proportion in LMFP and NCM).

**Table 2**

| | LMFP Number | NCM Number | Proportion of LMFP/% | 8>Aα+B(1-α)>1 |
|---|---|---|---|---|
| Example 1 | LMFP-1 | NCM-1 | 50 | 5.2 |
| Example 2 | LMFP-1 | NCM-1 | 45 | 5.3 |
| Example 3 | LMFP-1 | NCM-1 | 20 | 5.8 |
| Example 4 | LMFP-1 | NCM-1 | 3 | 6.14 |
| Example 5 | LMFP-2 | NCM-1 | 20 | 6.58 |
| Example 6 | LMFP-3 | NCM-1 | 20 | 5.13 |
| Example 7 | LMFP-4 | NCM-1 | 20 | 7.04 |
| Example 8 | LMFP-5 | NCM-1 | 20 | 5.06 |
| Example 9 | LMFP-6 | NCM-1 | 20 | 5.82 |
| Example 10 | LMFP-7 | NCM-1 | 20 | 5.84 |
| Example 11 | LMFP-8 | NCM-1 | 20 | 5.76 |
| Example 12 | LMFP-9 | NCM-1 | 20 | 5.82 |
| Example 13 | LMFP-10 | NCM-1 | 20 | 6.74 |
| Example 14 | LMFP-11 | NCM-2 | 20 | 11.34 |
| Example 15 | LMFP-11 | NCM-3 | 20 | 2.46 |
| Example 16 | LMFP-11 | NCM-4 | 20 | 7.34 |
| Example 17 | LMFP-11 | NCM-5 | 20 | 5.82 |
| Example 18 | LMFP-11 | NCM-6 | 20 | 5.9 |
| Example 19 | LMFP-11 | NCM-7 | 20 | 5.82 |
| Example 20 | LMFP-11 | NCM-8 | 20 | 5.82 |
| Example 21 | LMFP-11 | NCM-9 | 20 | 6.06 |
| Example 22 | LMFP-11 | NCM-10 | 20 | 5.82 |
| Example 23 | LMFP-11 | NCM-11 | 20 | 5.82 |
| Example 24 | LMFP-11 | NCM-12 | 20 | 5.82 |
| Example 25 | LMFP-11 | NCM-13 | 20 | 5.9 |
| Example 26 | LMFP-11 | NCM-14 | 20 | 5.82 |
| Example 27 | LMFP-11 | NCM-15 | 20 | 5.74 |
| Example 28 | LMFP-11 | NCM-16 | 20 | 5.82 |
| Example 29 | LMFP-11 | NCM-17 | 20 | 5.9 |
| Example 30 | LMFP-12 | NCM-1 | 20 | 5.82 |
| Example 31 | LMFP-11 | NCM-1 | 20 | 5.82 |
| Comparative Example 1 | LMFP-1 | -- | 100 | 4 |
| Comparative Example 2 | LMFP-1 | NCM-1 | 70 | 4.66 |
| Comparative Example 3 | -- | NCM-1 | 0 | 6.2 |
| Comparative Example 4 | LMFP-1 | NCM-18 | 20 | 6.74 |

The electrical performance was tested in the following manner.

### (1) Preparation of mixed electrode stacked battery:

Preparation of mixed positive electrode: The positive electrode active compositions in the examples and comparative examples described above were used as the positive electrode active material (the mixing ratio was based on the mass ratio of the two, mA + mB = 100%). The positive electrode active material, polyvinylidene fluoride (PVDF), and conductive carbon were added to a certain amount of N-methylpyrrolidone (NMP). The mass ratio of active material:PVDF:conductive carbon was 90:5:5, and the mixture was stirred in a drying room to form a homogeneous slurry, with a viscosity controlled to be 3000-10000 mPa·S. An aluminum foil was coated with the slurry described above, and dried and cold pressed to form a positive electrode plate;

Preparation of graphite negative electrode: Artificial graphite was used as the negative electrode active material. The negative electrode active material, sodium carboxymethylcellulose (CMC), conductive carbon, and styrene butadiene rubber (SBR) in a mass ratio of 94:1.5:2:2.5 were added to a certain amount of deionized water. The mixture was stirred in a drying room to form a homogeneous slurry, with a viscosity controlled to be 2000-12000 mPa·S. A copper foil was coated with the slurry described above, and the negative electrode coating mass was based on the matching relationship with the positive electrode (94% × negative electrode coating mass × graphite specific capacity = 1.15 × 90% × positive electrode coating mass × mixed positive electrode specific capacity, where the specific capacity refers to the specific capacity information of the material at the third cycle of the powder cycle of the lithium half-battery). The copper foil was then dried and cold pressed to form the negative electrode plate;

The electrolytic solution used was 1 mol/L LiPF6/(ethylene carbonate (EC) + diethyl carbonate (DEC) + dimethyl carbonate (DMC)) (volume ratio 1:1:1) + 5 wt.% fluoroethylene carbonate (FEC);

A porous polymer film made of polyethylene (PE) was used as the separation film.

In the drying room, stacked battery cells were assembled through processes including electrode plate punching/tab cleaning/stacking/welding/top sealing/liquid injection/preforming/vacuuming/forming/molding for testing.

### (2) Initial specific capacity test of stacked battery:

The stacked batteries prepared above were left to stand under a constant temperature environment of 25 °C for 5 min, and allowed to discharge at 1/3 C to 2.5 V; after standing for 5 min, the batteries were charged at 1/3 C constant current and constant voltage to 4.3 V or 4.25 V (Ni content > 70%, upper limit voltage was 4.25 V), and then charged at a constant voltage of 4.3 V or 4.25 V until the current reached ≤ 0.05 mA, and left to stand for 5 min. The charging capacity at this time was recorded as C0, and the batteries were then allowed to discharge at 1/3 C0 to 2.5 V. The discharge capacity at this time was the initial discharge capacity, and recorded as D0.

The specific capacity of the positive electrode active material at full charge was calculated by dividing the measured discharge capacity value (i.e., initial discharge capacity D0) by the mass of the positive electrode active material in the secondary battery.

### (3) Cycle performance test of secondary battery at 25 °C:

The secondary batteries prepared above were charged to 4.3 V or 4.25 V at 0.5 C0 at 2.5-4.3 V or 4.25 V under a constant temperature environment of 25 °C, then charged at a constant voltage of 4.3 V or 4.25 V until the current reached ≤ 0.05 mA, and left to stand for 5 min; the batteries were then allowed to discharge at 0.5 C to 2.5 V, and the capacity was recorded as Dn (n = 1, 2, 3...). The operation described above was repeated for more than 5000 cycles to determine the capacity fading value. The capacity fading value was calculated based on the ratio of Dn/D3, representing the state of health (SOH) of the battery cell. The number of cycles for each battery cell corresponding to 80% SOH was used as the criterion for evaluating the cycle performance.

### (4) Storage capacity

In a constant temperature environment of 60 °C, the batteries were charged from 2.5 V to 4.25-4.3 V at 0.5 C, and then charged at a constant voltage of 4.25-4.4 V until the current reached ≤ 0.05 mA; the batteries were allowed to discharge at 0.5 C to 2.5 V, and the discharge capacity DO was recorded; the batteries were then charged at a constant voltage of 4.25-4.4 V until the current reached ≤ 0.05 mA, and left to stand for 480 days; three cycles were performed continuously every 10 days during the standing period; in each cycle, the batteries were first allowed to discharge to 2.5 V at 0.5 C, and then charged at a constant voltage of 4.25-4.4 V until the current reached ≤ 0.05 mA; the discharge capacity of the third cycle was recorded as Dn (n = 1, 2, 3...), where n represents the nth 10 days of standing. The value of Dn divided by DO was taken as the SOH of the battery cell after the nth 10-day high-temperature storage, and the number of days of high-temperature storage during which 80% SOH was observed was recorded.

### (5) Charging capacity test:

First, the capacity of the soft-pack stacked batteries was tested. The process was as follows: The batteries were charged at a constant current at 0.33 C until the full charge voltage V1 was reached, and then charged at a constant voltage; the constant voltage charging ended when the charging current decreased to 0.05 C; subsequently, the batteries were allowed to discharge at 0.33 C to the full discharge voltage V2, and the process was repeated three times. The capacity result of the third cycle was taken as the final result, and the specific capacity of the positive electrode could be calculated using the data of the third cycle.

The soft-pack stacked batteries were subjected to charging tests at different rates (C1 < C2 < C3 < C4<...< Cn), and the charging rate during the test was required to be in an increasing order. During the charging process, the voltage of the soft-pack stacked batteries at full charge and the voltage of the negative electrode of the soft-pack stacked batteries were monitored simultaneously. The detailed process was as follows: The soft-pack stacked batteries were charged at C1 until the full charge voltage V1 was reached or the negative electrode voltage reached 0 V; the state of charge (SOC) value of the batteries at the end of charging was recorded, and the batteries were then allowed to discharge at 0.33 C to the full discharge voltage V2. The process described above was repeated to obtain the SOC value at the end of charging at different rates, where Cn at 100% SOC charging was defined as the charging capacity of the battery cell under this test scheme.

The test results are recorded in Table 3.

**Table 3**

| | Initial specific capacity/mAh/g | Storage time at 60 °C (days) | Cycle life at 25 °C @80%SOH | Charging capacity |
|---|---|---|---|---|
| Example 1 | 174.5 | 260 | 2450 | 2.20 |
| Example 2 | 176.55 | 270 | 2460 | 2.45 |
| Example 3 | 186.8 | 310 | 1760 | 3.20 |
| Example 4 | 193.77 | 290 | 1365 | 3.32 |
| Example 5 | 186.2 | 340 | 1936 | 2.62 |
| Example 6 | 187.4 | 280 | 1707 | 2.88 |
| Example 7 | 186.2 | 300 | 1839 | 2.36 |
| Example 8 | 187.4 | 280 | 1656 | 2.59 |
| Example 9 | 186.6 | 320 | 1848 | 2.88 |
| Example 10 | 187 | 260 | 1622 | 2.74 |
| Example 11 | 186.6 | 260 | 1700 | 2.30 |
| Example 12 | 187 | 250 | 1606 | 2.19 |
| Example 13 | 186.2 | 260 | 1408 | 2.34 |
| Example 14 | 182.8 | 250 | 1492 | 2.10 |
| Example 15 | 190 | 330 | 1619 | 2.85 |
| Example 16 | 183.6 | 290 | 1563 | 2.59 |
| Example 17 | 183.6 | 290 | 1558 | 3.02 |
| Example 18 | 186 | 350 | 1977 | 2.59 |
| Example 19 | 187.6 | 290 | 1630 | 2.87 |
| Example 20 | 188.4 | 260 | 1686 | 2.93 |
| Example 21 | 186.8 | 280 | 1478 | 2.46 |
| Example 22 | 170.8 | 370 | 1461 | 2.66 |
| Example 23 | 209.2 | 120 | 704 | 1.60 |
| Example 24 | 181.2 | 360 | 1960 | 2.75 |
| Example 25 | 191.6 | 300 | 2090 | 2.79 |
| Example 26 | 204.4 | 280 | 1974 | 2.87 |
| Example 27 | 162.8 | 330 | 1379 | 3.10 |
| Example 28 | 193.2 | 290 | 1981 | 2.63 |
| Example 29 | 169.2 | 360 | 1793 | 3.41 |
| Example 30 | 186.8 | 380 | 2112 | 3.52 |
| Example 31 | 186.8 | 340 | 1936 | 3 |
| Comparative Example 1 | 154 | 200 | 4000 | 0.80 |
| Comparative Example 2 | 166.3 | 220 | 3088 | 1.52 |
| Comparative Example 3 | 195 | 350 | 1200 | 4.00 |
| Comparative Example 4 | 191.6 | 230 | 1302 | 4.80 |

According to the data comparison of Examples 1-4, it can be seen that an excessively high or low proportion of phosphate positive electrode material would lead to the deterioration of storage life, and meanwhile, an increase in the proportion of phosphate positive electrode material could increase the cycle life, but would deteriorate the charging capacity. According to the comparison of Examples 5 to 8 and Examples 14 to 16, it can be seen that an increase in D_{V}50 of the material would deteriorate the charging capacity, but could improve the cycle performance and storage performance; however, an excessively large D_{V}50 would also affect the performance. According to the comparison of Examples 9 to 12, it can be seen that the BET of the phosphate positive electrode material was excessively low, which deteriorated the cycle performance and charging capacity. According to the data comparison of Examples 18 to 21, it can be seen that an excessively low BET of the ternary positive electrode material would deteriorate the charging capacity, cycle performance, and storage performance. According to the data comparison of Examples 22 to 29, it can be seen that an excessive Ni content would increase the specific capacity, but would deteriorate the charging capacity, cycle performance, and storage performance, and an excessive Co content would enhance the charging capacity and storage performance, but would deteriorate the specific capacity and cycle performance.

Although the present application has been described with reference to preferred examples, various modifications can be made and components can be replaced with equivalents without departing from the scope of the present application. In particular, the technical features mentioned in the examples may be combined in any manner as long as there are no structural conflicts. The present application is not limited to the specific examples disclosed herein, but encompasses all technical solutions falling within the scope of the claims.

## Claims

1. A positive electrode material composition, comprising a phosphate positive electrode material and a ternary positive electrode material, wherein a weight of the phosphate positive electrode material is recorded as W1, a weight of the ternary positive electrode material is recorded as W2, α = W1/(W1 + W2), 3% ≤ α ≤ 50%, the phosphate positive electrode material is a single crystal material or has a single crystal core, and the ternary positive electrode material is a single crystal or has a single crystal core.

2. The positive electrode material composition according to claim 1, wherein a particle size distribution of the positive electrode material composition satisfies the following relationship: 8 > Aα + B(1 - a) > 1, wherein A is a D_{V}50 of the phosphate positive electrode material, and B is a D_{V}50 of the ternary positive electrode material.

3. The positive electrode material composition according to claim 1 or 2, wherein the D_{V}50 of the phosphate positive electrode material is 0.8-8 µm, and a D_{V}90 < 30 µm.

4. The positive electrode material composition according to any one of claims 1 to 3, wherein a BET specific surface area of the phosphate positive electrode material is 8-20 m²/g.

5. The positive electrode material composition according to any one of claims 1 to 4, wherein a chemical formula of the phosphate positive electrode material is Li₁₊ₓMn_{1-y}A_{y}P_{1-z}R_{z}O₄, wherein x is any value in a range of -0.100-0.100, y is any value in a range of 0.001-0.500, and z is any value in a range of 0.001-0.100, with the values of x, y, and z satisfying the following condition: maintaining electrical neutrality of the chemical formula; A comprises one or more elements in the group consisting of Zn, Al, Na, K, Mg, Mo, W, Ti, V, Zr, Fe, Ni, Co, Ga, Sn, Sb, Nb, and Ge, and optionally A comprises one or more elements in the group consisting of Fe, Ti, V, Ni, Co, and Mg; and R comprises one or more elements in the group consisting of B, Si, N, S, F, Cl, and Br, and optionally R comprises one element in the group consisting of B, Si, N, and S; or
a chemical formula of the phosphate positive electrode material is LiₐAₓMn_{1-y}B_{y}P_{1-z}C_{z}O₄₋ₙDₙ, wherein A comprises one or more elements in the group consisting of Zn, Al, Na, K, Mg, Nb, Mo, and W, B comprises one or more elements in the group consisting of Ti, V, Zr, Fe, Ni, Mg, Co, Ga, Sn, Sb, Nb, and Ge, C comprises one or more elements in the group consisting of B (boron), S, Si, and N, D comprises one or more elements in the group consisting of S, F, Cl, and Br, a is selected from a range of 0.9-1.1, x is selected from a range of 0.001-0.1, y is selected from a range of 0.001-0.5, z is selected from a range of 0.001-0.1, n is selected from a range of 0.001-0.1, and the phosphate positive electrode material is electrically neutral.

6. The positive electrode material composition according to claim 5, wherein the phosphate positive electrode material comprises a single crystal core and a cladding layer coating the single crystal core, wherein the single crystal core has the chemical formula Li₁₊ₓMn_{1-y}A_{y}P_{1-z}R_{z}O₄ or the chemical formula LiₐAₓMn_{1-y}B_{y}P_{1-z}C_{z}O₄₋ₙDₙ, and the cladding layer is optionally one or more layers of pyrophosphate, phosphate, or carbon.

7. The positive electrode material composition according to any one of claims 1 to 6, wherein the D_{V}50 of the ternary positive electrode material is 2-8 µm, and a D_{V}99 ≤ 18 µm.

8. The positive electrode material composition according to any one of claims 1 to 7, wherein a BET specific surface area of the ternary positive electrode material is 0.42-1.5 m²/g.

9. The positive electrode material composition according to any one of claims 1 to 8, wherein the ternary positive electrode material is a single crystal NCM ternary positive electrode material or a single crystal NCA ternary positive electrode material, and optionally, in the ternary positive electrode material, a Ni molar content is 50%-99.5%, and a Co molar content is 0.5%-49.5%; further optionally, the Ni molar content is 60%-88%, and the Co molar content is 5%-35%.

10. The positive electrode material composition according to claim 9, wherein the ternary positive electrode material has a chemical formula Li_{a'}Ni_{b'}Co_{c'}M1_{d'}M2_{e'}O_{f'}R'_{g'}, wherein 0.75 ≤ a' ≤ 1.2, 0 < b'< 1, 0 < c' < 1, 0 < d'< 1, 0 ≤ e' ≤ 0.2, 1 ≤ f' ≤ 2.5, 0 ≤ g' ≤ 1, f' + g' ≤ 3, M1 is Mn element and/or Al element, M2 is one or more elements selected from Zr, Zn, Cu, Cr, Mg, Fe, V, Ti, Sr, Sb, Y, W, and Nb, and R' is one or more elements selected from N, F, S, and Cl.

11. A secondary battery, comprising a positive electrode plate, wherein the positive electrode plate comprises a positive electrode active material, the positive electrode active material being the positive electrode material composition according to any one of claims 1 to 10.

12. An electric device, comprising a secondary battery, wherein the secondary battery is selected from the secondary battery according to claim 11.
